# EUROPEAN PATENT SPECIFICATION

(11) **EP 4 025 101 B1**
(45) Date of publication and mention of the grant of the patent: **10.04.2024**
(21) Application number: 20764410.5
(22) Date of filing: 04.09.2020
(51) Int. Cl.: A47C 23/00

(54) **THERMOPLASTIC SPRING**
THERMOPLASTISCHE FEDER
RESSORT THERMOPLASTIQUE

(30) Priority: 05.09.2019 EP 19195496
(43) Date of publication of application: 13.07.2022
(73) Proprietor: Serdar Plastik Sanayi ve Ticaret Anonim Sirketi, 06395 Sincan/Ankara (TR)
(72) Inventor: TÜTEK, Serdar, 06935 Ahi Evran Osb/Sincan/Ankara (TR)
(74) Representative: Weickmann & Weickmann PartmbB
(86) International application number: PCT/EP2020/074742
(87) International publication number: WO 2021/043967

(56) References cited:
- WO-A1-2006/111685
- DE-U1-202015 102 183

## Description

The present invention is a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design.

### Technical Field of the Invention

The present invention relates to springs that are used in sectors where beds, couches, armchairs and suchlike furniture are manufactured and that is produced in order to provide comfort to the user.

### State of the Art

Springs that are known in the state of the art are generally manufactured from metal materials and become deformed after a certain period of usage which concordantly results in for respective goods to lose their definitive characteristics and causes them to make discomforting noises. Furthermore, they pose risks for human health due to corrosion. Moreover, since hardness scales are identical in every point of respective products, they cannot provide full comfort to user's body in terms of ergonomics.

Plastic springs are known for example from DE202015102183U1 and WO2006/111685A1.

### Brief Description of the Invention

The present invention as claimed in claim 1 provides a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design. The present invention is characterized by facilitating the installation process and rendering faulty installations impossible by means of tie pieces positioned on both lower and upper base portions.

### Detailed Description of the Invention

The present invention is a thermoplastic lightweight spring that can be used in beds, couches, armchairs and suchlike furniture, that is designed to provide healthy conditions an ergonomically correct position to user's body, that has different hardness scales, that does not make any noise, that is manufactured from stainless thermoplastic material, that can be installed much easier contrary to springs known in the state of the art, that prevents spring deformation which occurs in the progress of time due to usage, that is improved in durability compared to springs manufactured from various metals, that does not perforate the mattress in time contrary to metal springs and that gets aerated by means of its design.

The inventive spring that comprises of a female and a male part having butterfly shape which are positioned between the lower and the upper base portions has three different hardness scales and is of a structure that can be grouped by engaging female and male dies.

The entirety of the inventive spring is manufactured from thermoplastic material. Since the inventive spring is manufactured to have different hardness scales, it can be produced to provide desired hardness and softness scales in desired areas of respective products. The inventive spring reduces the pressure in the body to a minimum by means of its structure that has different hardness scales and provides comfort to the user. In comparison with springs that are used in the state of the art, the inventive spring comprises special tie pieces that are positioned on the body and that facilitate the installation process. Therefore, the inventive product provides a spring that can be used instead of springs that are known in bed and furniture sectors and that is characterized by facilitating the installation process and rendering faulty installations impossible by means of tie pieces positioned on base portions for the purposes of eliminating installation difficulties and preventing faulty installations.
1-Lower Plastic Spring Base Portion
2-Upper Plastic Spring Base Portion
3-Female Plastic Spring Die
4-Male Plastic Spring Die

According to the invention, female spring die 3 and/or male spring die 4 each has a butterfly shape formed by two wings, wherein each wing is formed by a closed loop. The pin 5 may be located at a connecting portion between the two loops of the male spring die and/or the hole 6 may be located at a connecting portion between the two loops of the female spring die 3. The closed-loop structures have an effect of stabilizing the structure such as to accommodate higher spring forces.

In a further preferred embodiment of the invention, the pin 5 is located in a central portion of male spring die 4 and/or hole 6 is located in a central portion of female spring die 3. In order to more reliably prevent faulty installations, male spring die 4 and female spring die 3 are preferably structurally different from one another. More particularly, in the central portion of male spring die 4, there is provided the pin 5 but no hole. Likewise, in the central portion of female spring die 3, there may be provided the hole 6 but no pin. In other words, only one of the two springs has the pin and only the other of the two springs has the hole in its central portion, respectively. According to another embodiment of the present invention, lower spring base portion 1 and upper spring base portion 2 are of circular shape, wherein in an assembled condition of the thermoplastic spring pin 5 and hole 6 are aligned coaxially at the central axis of lower spring base portion 1 and upper spring base portion 2. This allows an increased symmetry of the structure and an improved distribution of forces during spring movement of the thermoplastic spring. Unintended loosening of the connection between pin 5 and hole 6 during use can therefore be avoided.

According to the present invention, tie pieces 7 are positioned on both the lower spring base portion 1 and the upper spring base portion 2, which are adapted to receive tie protrusions 8 provided on female spring die 3 and male spring die 4, respectively. Tie pieces 7 are slit-shaped such as to receive plate-shaped tie protrusions 8, which has the technical effect that torsional components of a load applied to the thermoplastic spring can be better accommodated by female spring die 3 and male spring die 4. More preferably, each tie piece 7 may comprise a first elastic portion 7a and a second elastic portion 7b, wherein both elastic portions 7a, 7b may be elastically movable towards and away from one another such as to catch therebetween tie protrusion 8. This has an advantage that tie protrusions 8 may be held between first and second elastic portions 7a and 7b with a defined elastic force. Thus, for normal manufacturing tolerances, the forces required for installation or removal of the tie protrusions 8 in or from tie pieces 7 will be constant and well defined, which further removes installation difficulties.

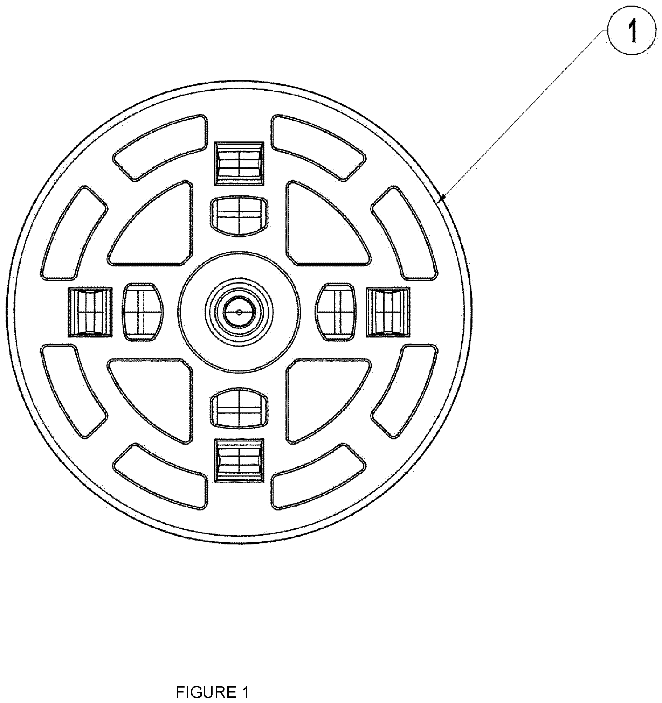

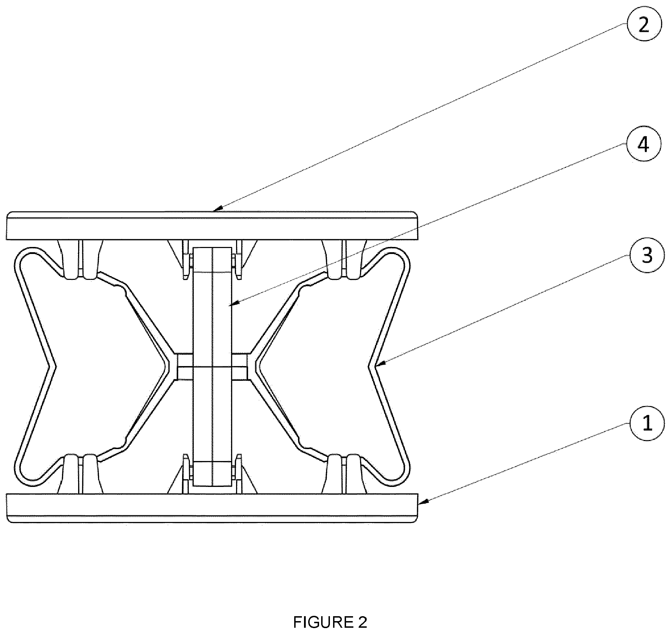

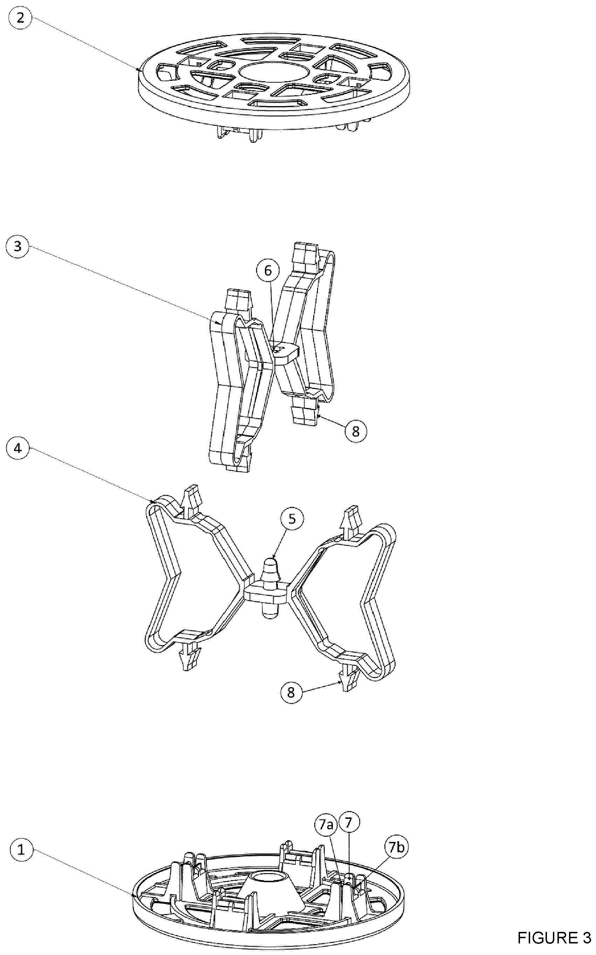

## Claims

1. Thermoplastic spring, comprising:
- a lower spring base portion (1) and an upper spring base portion (2), wherein tie pieces (7) are positioned on both the lower spring base portion (1) and the upper spring base portion (2) for facilitating the installation process,
- a female spring die (3) and a male spring die (4)
wherein tie protrusions (8) are provided on both the female spring die (3) and the male spring die (4);
wherein the tie pieces (7) are slit-shaped such as to receive the plate-shaped tie protrusions (8),
wherein the female spring die (3) and the male spring die (4) are located between the lower spring base portion (1) and the upper spring base portion (2),
wherein the female spring die (3) and the male spring die (4) each have a butterfly shape formed by two wings and engaged between the lower (1) and upper (2) spring base portions, wherein each wing is formed by a closed loop,
wherein a pin is located on the male spring die (4) and a hole is located on the female spring die (3),
wherein an installation process of the thermoplastic spring is performed by placing the pin through the hole.

2. Thermoplastic spring according to claim 1, manufactured from thermoplastic, stainless, low-noise material.

3. Thermoplastic spring according to any of the preceding claims, manufactured in three different hardness scales.

4. Thermoplastic spring according to any of the preceding claims, comprising a porous structure.

## Patentansprüche

1. Thermoplastische Feder, umfassend:
- einen unteren Federbasisabschnitt (1) und einen oberen Federbasisabschnitt (2), wobei Verbindungsteile (7) sowohl auf dem unteren Federbasisabschnitt (1) als auch auf dem oberen Federbasisabschnitt (2) angeordnet sind, um den Installationsprozess zu erleichtern,
- ein weibliches Federformstück (3) und ein männliches Federformstück (4), wobei sowohl an dem weiblichen Federformstück (3) als auch an dem männlichen Federformstück (4) Verbindungsvorsprünge (8) bereitgestellt sind;
wobei die Verbindungsteile (7) schlitzförmig sind, um die plattenförmigen Verbindungsvorsprünge (8) aufzunehmen,
wobei das weibliche Federformstück (3) und das männliche Federformstück (4) zwischen dem unteren Federbasisabschnitt (1) und dem oberen Federbasisabschnitt (2) angeordnet sind,
wobei das weibliche Federformstück (3) und das männliche Federformstück (4) jeweils eine Schmetterlingsform aufweisen, die durch zwei Flügel gebildet ist und zwischen den unteren (1) und oberen (2) Federbasisabschnitten in Eingriff steht, wobei jeder Flügel durch eine geschlossene Schleife gebildet ist,
wobei ein Stift auf dem männlichen Federformstück (4) angeordnet ist und ein Loch auf dem weiblichen Federformstück (3) angeordnet ist,
wobei ein Installationsprozess der thermoplastischen Feder durchgeführt wird, indem der Stift durch das Loch gesteckt wird.

2. Thermoplastische Feder nach Anspruch 1, hergestellt aus thermoplastischem, rostfreiem, geräuscharmem Material.

3. Thermoplastische Feder nach einem der vorhergehenden Ansprüche, hergestellt in drei verschiedenen Härtestufen.

4. Thermoplastische Feder nach einem der vorhergehenden Ansprüche, umfassend eine poröse Struktur.

## Revendications

1. Ressort thermoplastique comprenant :
- une partie de base de ressort inférieure (1) et une partie de base de ressort supérieure (2), dans lequel des pièces d'attache (7) sont positionnées à la fois sur la partie de base de ressort inférieure (1) et la partie de base de ressort supérieure (2) pour faciliter le processus d'installation,
- une matrice de ressort femelle (3) et une matrice de ressort mâle (4), dans lequel des saillies d'attache (8) sont prévues à la fois sur la matrice de ressort femelle (3) et la matrice de ressort mâle (4) ;
dans lequel les pièces d'attache (7) sont en forme de fente de sorte à recevoir les saillies d'attache en forme de plaque (8),
dans lequel la matrice de ressort femelle (3) et la matrice de ressort mâle (4) sont situées entre la partie de base de ressort inférieure (1) et la partie de base de ressort supérieure (2),
dans lequel la matrice de ressort femelle (3) et la matrice de ressort mâle (4) présentent chacune une forme de papillon formée par deux ailes et mise en prise entre les parties de base de ressort inférieure (1) et supérieure (2), dans lequel chaque aile est formée par une boucle fermée,
dans lequel un axe est situé sur la matrice de ressort mâle (4) et un trou est situé sur la matrice de ressort femelle (3),
dans lequel un processus d'installation du ressort thermoplastique est réalisé par le placement de l'axe à travers le trou.

2. Ressort thermoplastique selon la revendication 1, fabriqué en un matériau thermoplastique, inoxydable, à faible bruit.

3. Ressort thermoplastique selon l'une quelconque des revendications précédentes, fabriqué en trois échelles de dureté différentes.

4. Ressort thermoplastique selon l'une quelconque des revendications précédentes, comprenant une structure poreuse.
